# EUROPEAN PATENT APPLICATION

(11) **EP 4 484 162 A1**
(43) Date of publication of application: **01.01.2025**
(21) Application number: 23382665.0
(22) Date of filing: 28.06.2023
(51) Int. Cl.: B32B 27/08, B32B 27/32, C08J 5/18, C08L 23/06

(54) **ENHANCED TOUGHNESS FOR MACHINE DIRECTION ORIENTATION OF POLYETHYLENE FILMS AND THE METHOD THEREOF**

(71) Applicant: Dow Global Technologies LLC, Midland, MI 48674 (US)
(72) Inventor: YEE, Wu Aik, 638025 Singapore (SG); NIETO PALOMO, Jesús, 43006 Tarragona (ES); WANG, Zheng Jie, 638025 Singapore (SG)
(74) Representative: Elzaburu S.L.P.

(57) **Abstract**

According to one or more embodiments described herein, a multilayer film may include a first layer that may include a first polyethylene-based polymer, a core that may include a first core layer that may include a first polyolefin, and a second layer that may include a second polyethylene-based polymer. The core may be positioned between the first layer and the second layer. A thickness of the first core layer may be less than 10% of the total thickness of the multilayer film. The first polyolefin may include from 4 wt.% to 12 wt.% of ethylene and from 75 wt.% to 96 wt.% of propylene based on the total weight of the first polyolefin. The first polyethylene-based polymer and the second polyethylene-based polymer may have the same composition or different compositions. The multilayer film may be machine direction oriented with a draw ratio of at least 4:1.

## Description

### TECHNICAL FIELD

Embodiments of the present disclosure generally relate to polymeric materials, and in particular to multilayer films that include polymeric materials.

### BACKGROUND

Multilayer films that incorporate a variety of materials, including polypropylene, polyamide, and polyethylene terephthalate, are widely used in industrial and consumer products.

### SUMMARY

Multilayer films often are enhanced by having desirable properties such as sufficient puncture resistance-for example, to avoid the film from breakage during the film wrapping process on a pallet, or in food packaging, handling, and transportation. Combination of layers having different materials can allow for good performance of the films, but such multilayer films can be difficult, if not impossible, to recycle together due to the different types of materials that are not recycle-compatible with each other. As demand for sustainable and recyclable materials continues to rise, there remains a need for multilayer films that can be recycled more easily and that may exhibit desirable puncture resistance and/or improved or maintained other properties.

On the other hand, conventional machine direction oriented polyethylene films may have relatively good recyclability, but may suffer from a number of undesired properties, such as relatively poor puncture resistance, asymmetrical performance, and/or poor haze and clarity when compared to other films.

Described herein, according to some embodiments, are machine direction oriented polyethylene films that have relatively good puncture resistance. It has been discovered that the addition of a relatively thin core layer, disposed between two polyethylene-based layers, and comprising a polypropylene-based copolymer that includes ethylene to a multilayer film may impart good tear resistance while maintaining the acceptable recyclability of machine direction oriented polyethylene films.

According to one or more embodiments of the present disclosure, a multilayer film may include a first layer that may include a first polyethylene-based polymer. The multilayer film may also include a core that may include a first core layer that may include a first polyolefin. A thickness of the first core layer may be less than 10% of the total thickness of the multilayer film. The first polyolefin may include from 4 wt.% to 12 wt.% of ethylene based on the total weight of the first polyolefin and from 75 wt.% to 96 wt.% of propylene based on the total weight of the first polyolefin. The multilayer film may also include a second layer that may include a second polyethylene-based polymer. The core may be positioned between the first layer and the second layer. The first polyethylene-based polymer and the second polyethylene-based polymer may have the same composition or different compositions. The multilayer film may be machine direction oriented with a draw ratio of at least 4:1.

Additional features and advantages of the present disclosure will be set forth in the detailed description, which follows, and in part will be apparent to those skilled in the art from that description or recognized by practicing the embodiments described herein, including the detailed description, which follows the claims.

### DETAILED DESCRIPTION

Specific embodiments of the present application will now be described. The disclosure may, however, be embodied in different forms and should not be construed as limited to the embodiments set forth in this disclosure. Rather, these embodiments are provided so that this disclosure will be thorough and complete and will fully convey the scope of the subject matter to those skilled in the art.

Generally, described in this disclosure are various embodiments of multilayer films. Such, multilayer films can be used, for example, in packaging applications. The multilayer films may include a first layer comprising a first polyethylene-based polymer, a core comprising a first core layer comprising a first polyolefin, and a second layer comprising a second polyethylene-based polymer. The core may be positioned between the first layer and the second layer.

### Definitions

The term "polymer" refers to polymeric compounds prepared by polymerizing monomers, whether of the same or a different type. Accordingly, the generic term polymer includes homopolymers, which are polymers prepared by polymerizing only one monomer, and copolymers, which are polymers prepared by polymerizing two or more different monomers.

The term "interpolymer" refers to polymers prepared by polymerizing at least two different types of monomers. Accordingly, the generic term interpolymer includes copolymers and other polymers prepared by polymerizing more than two different monomers, such as terpolymers.

The terms "polyolefin," "polyolefin polymer," and "polyolefin resin" refer to polymers prepared by polymerizing a simple olefin (also referred to as an alkene, which has the general formula CₙH₂ₙ) monomer. Accordingly, the generic term polyolefin includes polymers prepared by polymerizing ethylene monomer with or without one or more comonomers, such as polyethylene, and polymers prepared by polymerizing propylene monomer with or without one or more comonomers, such as polypropylene.

The terms "polyethylene" and "ethylene-based polymer" refer to polyolefins comprising greater than 50 percent (%) by mole of units that have been derived from ethylene monomer, which includes polyethylene homopolymers and copolymers. Common forms of polyethylene known in the art include Low Density Polyethylene (LDPE), Linear Low Density Polyethylene (LLDPE), Ultra Low Density Polyethylene (ULDPE), Very Low Density Polyethylene (VLDPE), Medium Density Polyethylene (MDPE), and High Density Polyethylene (HDPE).

The term "LDPE" may also be referred to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US 4,599,392, which is hereby incorporated by reference). LDPE resins typically have a density in the range of 0.916 to 0.935 g/cm³.

The term "LLDPE", includes both resin made using the traditional Ziegler-Natta catalyst systems and chromium-based catalyst systems as well as single-site catalysts, including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy), and includes linear, substantially linear or heterogeneous polyethylene copolymers or homopolymers. LLDPEs contain less long chain branching than LDPEs and include the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/cm³. "MDPE" is typically made using chromium or Ziegler-Natta catalysts or using single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy), and typically have a molecular weight distribution ("MWD") greater than 2.5.

The term "HDPE" refers to polyethylenes having densities greater than about 0.935 g/cm³ and up to about 0.980 g/cm³, which are generally prepared with Ziegler-Natta catalysts, chrome catalysts or single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy).

The term "ULDPE" refers to polyethylenes having densities of 0.855 to 0.912 g/cm³, which are generally prepared with Ziegler-Natta catalysts, chrome catalysts, or single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy). ULDPEs include, but are not limited to, polyethylene (ethylene-based) plastomers and polyethylene (ethylene-based) elastomers.

The term "polypropylene" or "propylene-based polymer" refers to a polymer that comprises, in polymerized form, refers to polymers comprising greater than 50% by mole of units which have been derived from propylene monomer. This includes propylene homopolymer, random copolymer polypropylene, impact copolymer polypropylene, propylene/α-olefin copolymer, and propylene/ethylene/α-olefin terpolymer.

The term "melt flow ratio" refers to a ratio of melt indices of a polymer. Accordingly, the generic term melt flow ratio includes a ratio of a high load melt index (I₂₁) of a polymer to a melt index (I₂) of the polymer, which may also be referred to as an "MFR₂₁."

The term "composition" refers to a mixture of materials that comprises the composition, as well as reaction products and decomposition products formed from the materials of the composition.

The terms "comprising," "including," "having," and their derivatives, are not intended to exclude the presence of any additional component, step, or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step, or procedure, excepting those that are not essential to operability. The term "consisting of" excludes any component, step, or procedure not specifically delineated or listed.

"Multilayer structure" or "multilayer film" means any structure having more than one layer. For example, the multilayer structure (for example, a film) may have two, three, four, five, or more layers. A multilayer structure may be described as having the layers designated with letters. For example, a three layer structure designated as A/B/C may have a core layer, B, and two external layers, A and C. Likewise, a structure having two core layers, B and C, and two external layers, A and D, would be designated A/B/C/D.

### Multilayer Films

Reference will now be made to embodiments of the multilayer films described herein. Embodiments of the presently described multilayer films may include at least three layers.

Multilayer films of the present disclosure may include at least 3 layers and even as many as 11 or more layers. The number of layers in the multilayer film may depend on a number of factors including, for example, the composition of each layer in the multilayer film, the desired properties of the multilayer film, the desired end-use application of the multilayer film, the manufacturing process of the multilayer film, and others. In one or more embodiments the multilayer film may have from 3 layer to 11 layers, such as from 3 layers to 4 layers, from 4 layers to 5 layers, from 5 layers to 6 layers, from 6 layers to 7 layers, from 7 layers to 8 layers, from 8 layers to 9 layers, from 9 layers to 10 layers, from 10 layers to 11 layers, or from any combination of one or more of these endpoints.

In one or more embodiments, the multilayer films of the present disclosure may be machine direction oriented. The multilayer films of the present disclosure may be machine direction oriented with a draw ratio of at least 4:1, at least 5:1, or even at least 6:1.

The multilayer film may be a three-layer structure designated as A/B/C, where the first layer may be designated as A, the first core layer may be designated as B, and the second layer may be designated as C. In some embodiments, one or both of the first layer and the second layer may be referred to as "skin layers" or "outer layers." In embodiments, the first core layer may be positioned between the first layer and the second layer. In further embodiments, the first layer and the second layer may be the outermost layers of the multilayer film. As used herein, the outermost layers of the multilayer film may be understood to mean there may not be another layer deposited over the outermost layer, such that the outermost layer is in direct contact with the surrounding air.

In one or more embodiments, the first core layer and the first layer, the first core layer and second layer, or both may be in direct contact with one another. As used herein, "direct contact" means that there may not be any other layers positioned between the two layers that are in direct contact with one another. In other embodiments, the multilayer film may include one or more additional layers, for example, one or more additional core layers, which may be disposed between the first core layer and the first layer, between the first core layer and the second layer or both.

As described in more detail subsequently in this disclosure, the multilayer films may include a first layer comprising a first polyethylene-based polymer, a first core layer comprising a first polyolefin, and a second layer comprising a second polyethylene-based polymer. The first polyethylene-based polymer and the second polyethylene-based polymer may be the same or different in composition. It should be understood that any of the foregoing layers can further comprise one or more additives as known to those of skill in the art such as, for example, plasticizers, stabilizers including viscosity stabilizers, hydrolytic stabilizers, primary and secondary antioxidants, ultraviolet light absorbers, anti-static agents, dyes, pigments or other coloring agents, inorganic fillers, fire-retardants, lubricants, reinforcing agents such as glass fiber and flakes, synthetic (for example, aramid) fiber or pulp, foaming or blowing agents, processing aids, slip additives, antiblock agents such as silica or talc, release agents, tackifying resins, or combinations of two or more thereof. Inorganic fillers, such as calcium carbonate, and the like can also be incorporated into one or more of the first layer, the second layer, the third layer, and combinations thereof. In some embodiments, the first layer, the second layer, the third layer, and combinations may each include up to 5 weight percent of such additional additives based on the total weight of the respective layer. All individual values and subranges from 0 wt.% to 5 wt.% are included and disclosed herein; for example, the total amount of additives in the first layer, the second layer, or the third layer can be from 0.5 wt.% to 5 wt.%, from 0.5 wt.% to 4 wt.%, from 0.5 wt.% to 3 wt.%, from 0.5 wt.% to 2 wt.%, from 0.5 wt.% to 1 wt.%, from 1 wt.% to 5 wt.%, from 1 wt.% to 4 wt.%, from 1 wt.% to 3 wt.%, from 1 wt.% to 2 wt. %, from 2 wt. % to 5 wt. %, from 2 wt. % to 4 wt. %, from 2 wt. % to 3 wt. %, from 3 wt. % to 5 wt.%, from 3 wt.% to 4 wt.%, or from 4 wt.% to 5 wt.% based on the total weight of the respective layer. The incorporation of the additives can be carried out by any known process such as, for example, by dry blending, by extruding a mixture of the various constituents, by the conventional masterbatch technique, or the like.

In one or more embodiments, the multilayer films of the present disclosure comprise greater than or equal to 85 wt.% of polyethylene-based polymers, based on the total weight of the multilayer film, such as greater than or equal to 86 wt.%, greater than or equal to 87 wt.%, greater than or equal to 88 wt.%, greater than or equal to 89 wt.% or even greater than or equal to 90 wt.% of polyethylene based polymers based on the total weight of the multilayer film.

The multilayer films of the present disclosure can have a variety of thicknesses. The thickness of the multilayer film may depend on a number of factors including, for example, the number of layers in the multilayer film, the composition of the layers in the multilayer film, the desired properties of the multilayer film, the desired end-use application of the film, the manufacturing process of the multilayer film, and others. In one or more embodiments, the multilayer film may have a thickness of from 10 microns to 250 microns, such as from 10 microns to 20 microns, from 20 microns to 30 microns, from 30 microns to 40 microns, from 40 microns to 50 microns, from 50 microns to 60 microns, from 60 microns to 70 microns, from 70 microns to 80 microns, from 80 microns to 90 microns, from 90 microns to 100 microns, from 100 microns to 110 microns, from 110 microns to 120 microns, from 120 microns to 130 microns, from 130 microns to 140 microns, from 140 microns to 150 microns, from 150 microns to 160 microns, from 160 microns to 170 microns, from 170 microns to 180 microns, from 180 microns to 190 microns, from 190 microns to 200 microns, from 200 microns to 210 microns, from 210 microns to 220 microns, from 220 microns to 230 microns, from 230 microns to 240 microns, from 240 microns to 250 microns, or from any combination of one or more of these ranges.

In one or more embodiments, the multilayer film may have a puncture force of greater than or equal to 10 newton when measured according to the test methods described subsequently in this disclosure, such as greater than or equal to 15 newton, greater than or equal to 20 newton, or even greater than or equal to 25 newton. In one or more embodiments, the multilayer film may have a puncture force of from 10 newton to 50 newton, such as from 10 newton to 15 newton, from 15 newton to 20 newton, from 20 newton to 25 newton, from 25 newton to 30 newton, from 30 newton to 35 newton, from 35 newton to 40 newton, from 40 newton to 45 newton, from 45 newton to 50 newton, or from any combination of one or more of these ranges.

In one or more embodiments, the multilayer film may have a machine direction tear resistance of greater than or equal to 0.1 newton, such as greater than or equal to 0.2 newton, greater than or equal to 0.3 newton, greater than or equal to 0.4 newton, greater than or equal to 0.5 newton, greater than or equal to 0.6 newton, greater than or equal to 0.7 newton, greater than or equal to 0.8 newton, greater than or equal to 0.9 newton, or even greater than or equal to 1.0 newton. In one or more embodiments, the multilayer film may have a cross direction tear resistance of greater than or equal to 0.5 newton, such as greater than or equal to 1 newton, greater than or equal to 1.5 newton, greater than or equal to 2 newton, greater than or equal to 2.5 newton, greater than or equal to 3 newton, or even greater than or equal to 3.5 newton.

### Core

As stated previously, the presently disclosed multilayer films may include a core. In the multilayer film designated as three-layer structure, A/B/C, the core layer may be designated as B. In one or more embodiments, the core may comprise a first core layer. In further embodiments, the core layer may comprise additional core layers, such as a second core layer and a third core layer.

In one or more embodiments, the core comprises a first core layer. The first core layer may comprise a first polyolefin. The first polyolefin may comprise from 4 wt.% to 12 wt.% of ethylene based on the total weight of the first polyolefin and from 75 wt.% to 96 wt.% of propylene based on the total weight of the first polyolefin. In one or more embodiments, the first polyolefin may comprise ethylene in an amount from 4 wt.% to 5 wt.%, from 5 wt.% to 6 wt.%, from 6 wt.% to 7 wt.%, from 7 wt.% to 8 wt.%, from 8 wt.% to 9 wt.%, from 9 wt.% to 10 wt.%, from 10 wt.% to 11 wt.%, from 11 wt.% to 12 wt.%, or from any combination of one or more of these ranges. In one or more embodiments the first polyolefin may comprise propylene in an amount from 75 wt.% to 76 wt.%, from 76 wt.% to 78 wt.%, from 78 wt.% to 80 wt.%, from 80 wt.% to 82 wt.%, from 82 wt.% to 84 wt.%, from 84 wt.% to 86 wt.%, from 86 wt.% to 88 wt.%, from 88 wt.% to 90 wt.%, from 90 wt.% to 92 wt.%, from 92 wt.% to 94 wt.%, from 94 wt.% to 96 wt.%, or from any combination of one or more of these ranges. In some embodiments, the first polyolefin may comprise from 8 wt.% to 12 wt.% of ethylene and from 75 wt.% to 85 wt.% of propylene based on the total weight of the first polyolefin.

Without being bound by theory, it is believed that when pure polyethylene and pure polypropylene are co-extruded in a multilayer film and are in adhering contact with each other they may delaminate if a force is applied due to incompatibilities in the crystallization conditions of polyethylene and polypropylene. The different crystallization kinetics and temperatures of polyethylene and polypropylene may prevent adhesion of the polymers when coextruded by causing polypropylene and polyethylene to be immiscible when melted or to become immiscible during cooling. It is believed, that the addition of polyethylene to a polypropylene polymer to form a propylene-ethylene copolymer may reduce, but not eliminate these incompatibilities and reduce the risk of delamination and reduce the extent of immiscibility of the polymers. However, it is believed that the incompatibility of a propylene-ethylene copolymer with polyethylene-based polymers may beneficially improve the properties of an oriented multilayer film that comprises a polyethylene-based polymer and a propylene-ethylene copolymer, such as, for example, the multilayer films described herein, when compared to multilayer films that do not comprise such polymers. It is believed that the incompatibility between the layers may cause micro-delamination when force is applied, this micro-delamination may absorb energy, which may improve the physical resistance of the multilayer film when compared to multilayer films that do not comprise such layers.

In one or more embodiments, the first polyolefin may have a density of from 0.850 g/cm³ to 0.885 g/cm³, such as from 0.850 g/cm³ to 0.855 g/cm³, from 0.855 g/cm³ to 0.860 g/cm³, from 0.860 g/cm³ to 0.865 g/cm³, from 0.865 g/cm³ to 0.870 g/cm³, from 0.870 g/cm³ to 0.875 g/cm³, from 0.875 g/cm³ to 0.880 g/cm³, from 0.880 g/cm³ to 0.885 g/cm³, or from any combination of one or more of these ranges.

In one or more embodiments, the first polyolefin may have a melt index (I₂) of from 1.5 g/10 min to 25 g/10 min, such as from 2 g/10 min to 3 g/10 min, from 3 g/10 min to 4 g/10 min, from 4 g/10 min to 5 g/10 min, from 5 g/10 min to 6 g/10 min, from 6 g/10 min to 7 g/10 min, from 7 g/10 min to 8 g/10 min, from 8 g/10 min to 9 g/10 min, from 9 g/10 min to 10 g/10 min, from 10 g/10 min to 11 g/10 min, from 11 g/10 min to 12 g/10 min, from 12 g/10 min to 13 g/10 min, from 13 g/10 min to 14 g/10 min, from 14 g/10 min to 15 g/10 min, from 15 g/10 min to 16 g/10 min, from 16 g/10 min to 17 g/10 min, from 17 g/10 min to 18 g/10 min, from 18 g/10 min to 19 g/10 min, from 19 g/10 min to 20 g/10 min, from 20 g/10 min to 21 g/10 min, from 21 g/10 min to 22 g/10 min, from 22 g/10 min to 23 g/10 min, from 23 g/10 min to 24 g/10 min, from 24 g/10 min to 25 g/10 min, or from any combination of one or more of these ranges.

Examples of commercially available propylene-ethylene copolymers that can be used in embodiments of the presently described subject matter include polymers under the name VERSIFY^{™} commercially available from Dow, Inc. and VISTAMAXX^{™} from the ExxonMobil Chemical Company.

In some embodiments, the first polyolefin comprises from 80 wt.% to 100 wt.% of the first core layer, based on the total weight of the first core layer. All individual values and subranges of from 80 wt.% to 100 wt.% are disclosed herein. In some embodiments, the first polyolefin comprises from 85 wt.% to 100 wt.%, from 90 wt.% to 100 wt.%, from 95 wt.% to 100 wt.%, or from 99 wt.% to 100 wt.% of the first core layer, based on the total weight of the first core layer.

In one or more embodiments, the thickness of the first core layer may be less than 10% of the total thickness of the multilayer film. In one or more embodiments, the thickness of the first core layer may be less than 9 % of the total thickness of the multilayer film, less than 8 %, less than 7 %, less than 6 %, or even less than 5 % of the total thickness of the multilayer film.

In one or more embodiments, the core may comprise a second core layer and a third core layer. In one or more embodiments, the first core layer may be positioned between the second core layer and the third core layer. In other embodiments, the second core layer may be positioned the first core layer and the third core layer. In one or more embodiments, the second core layer may comprise a third polyethylene-based polymer. In one or more embodiments, the third core layer may comprise a fourth polyethylene-based polymer. In some embodiments, the second core layer may comprise a fifth polyethylene-based polymer. In some embodiments, the third polyethylene-based polymer and the fourth polyethylene-based polymer may have the same composition. In other embodiments, the third polyethylene-based polymer and the fourth polyethylene-based polymer may have different compositions.

As described hereinabove, in one or more embodiments, the second core layer may be positioned between the first core layer and the third core layer. In such embodiments, the first core layer and the third core layer may both comprise the first polyolefin. The second core layer may comprise a fifth polyethylene-based polymer. In embodiments where the first and third core layers comprise the first polyolefin the sum of the thickness of the first core layer and the thickness of the third core layer may be less than 20 % of the total thickness of the multilayer film, such as less than 18%, less than 16%, less than 14%, less than 12%, or even less than 10% of the total thickness of the multilayer film. In one or more embodiments the sum of the thickness of the first core layer and the thickness of the third core layer may be from 5% to 20% of the total thickness of the multilayer film, such as from 5% to 6%, from 6% to 7%, from 7% to 8%, from 8% to 9%, from 9% to 10%, from 10% to 11%, from 11% to 12%, from 12% to 13%, from 13% to 14%, from 14% to 15%, from 15% to 16%, from 16% to 17%, from 17% to 18%, from 18% to 19%, from 19% to 20%, or from any combination of one or more of these ranges.

In one or more embodiments, the third polyethylene-based polymer, the fourth polyethylene-based polymer, and the fifth polyethylene-based polymer may include one or more of an LLDPE, an HDPE, an MDPE, and an LDPE. In some embodiments, the third polyethylene-based polymer, the fourth polyethylene-based polymer, and the fifth polyethylene-based polymers may be a blend of polyethylene-based polymers.

In one or more embodiments, the third polyethylene-based polymer, the fourth polyethylene-based polymer, and the fifth polyethylene-based polymer may have a density of less than or equal to 0.952 g/cm³. The third polyethylene-based polymer and the fourth polyethylene based polymer may have a density of from 0.920 g/cm³ to 0.952 g/cm³, such as from 0.920 g/cm³ to 0.925 g/cm³, from 0.925 g/cm³ to 0.930 g/cm³, from 0.930 g/cm³ to 0.935 g/cm³, from 0.935 g/cm³ to 0.940 g/cm³, from 0.940 g/cm³ to 0.945 g/cm³, from 0.945 g/cm³ to 0.950 g/cm³, from 0.950 g/cm³ to 0.952 g/cm³, or from any combination of one or more of these endpoints.

In one or more embodiments, the third polyethylene-based polymer, the fourth polyethylene-based polymer, and the fifth polyethylene based polymer may have a melt index (I₂) of less than or equal to 7.5 g/10 min. The fourth polyethylene-based polymer and the fifth polyethylene-based polymer may have a melt index of from 0.3 g/10 min to 7.5 g/10 min, such as from 0.3 g/10 min to 0.5 g/10 min, from 0.5 g/10 min to 1.0 g/10 min, from 1.0 g/10 min to 1.5 g/10 min, from 1.5 g/10 min to 2.0 g/10 min, from 2.0 g/10 min to 2.5 g/10 min, from 2.5 g/10 min to 3.0 g/10 min, from 3.0 g/10 min to 3.5 g/10 min, from 3.5 g/10 min to 4.0 g/10 min, from 4.0 g/10 min to 4.5 g/10 min, from 4.5 g/10 min to 5.0 g/10 min, from 5.0 g/10 min to 5.5 g/10 min, from 5.5 g/10 min to 6.0 g/10 min, from 6.0 g/10 min to 6.5 g/10 min, from 6.5 g/10 min to 7.0 g/10 min, from 7.0 g/10 min to 7.5 g/10 min, or from any combination of one or more of these ranges.

Commercially available examples of polyethylene-based polymers that may be used as the third, fourth, and fifth polyethylene based polymers include those commercially available from Dow, Inc. under the name ELITE^{™} and INNATE^{™} including, for example, ELITE^{™} 5538G, INNATE^{™} ST70, and INNATE^{™} TH60 and those commercially available from the ExxonMobil Chemical Company under the name EXCEED^{™} and ENABLE^{™} including, for example, EXCEED^{™} 1018MA, ENABLE^{™} 3505MC, EXCEED^{™} XP 8318MJ, and EXCEED^{™} S 9272ML.

As described hereinabove, in one or more embodiments, the second core layer may be positioned between the first core layer and the third core layer. In such embodiments, the first core layer and the third core layer may both comprise the first polyolefin and the second core layer may comprise a fifth polyethylene-based polymer.

### First Layer and Second Layer of the Multilayer Film

The first layer and second layer of the multilayer film are not particularly limited. In one or more embodiments, the first layer and second layer may have the same polymer composition or may have different polymer compositions. In one or more embodiments, the first layer may comprise a first polyethylene-based polymer and the second layer may comprise a second polyethylene-based polymer.

In one or more embodiments, the first polyethylene-based polymer and the second polyethylene based polymer may include one or more of an LLDPE, an HDPE, an MDPE, and an LDPE.

In one or more embodiments, one or both of the first polyethylene-based polymer and the second polyethylene-based polymer may have a density of from 0.925 g/cm³ to 0.970 g/cm³, such as from 0.925 g/cm³ to 0.930 g/cm³, from 0.930 g/cm³ to 0.935 g/cm³, from 0.935 g/cm³ to 0.940 g/cm³, from 0.940 g/cm³ to 0.945 g/cm³, from 0.945 g/cm³ to 0.950 g/cm³, from 0.950 g/cm³ to 0.955 g/cm³, from 0.955 g/cm³ to 0.960 g/cm³, from 0.960 g/cm³ to 0.965 g/cm³, from 0.965 g/cm³ to 0.970 g/cm³, from 0.970 g/cm³ to 0.975 g/cm³, or from any combination of one or more of these ranges.

In one or more embodiments, one or both of the first polyethylene-based polymer and the second polyethylene-based polymer may have a melt index (I₂) of from 0.3 g/10 min to 7.0 g/10 min, such as from 0.3 g/10 min to 0.5 g/10 min, from 0.5 g/10 min to 1.0 g/10 min, from 1.0 g/10 min to 1.5 g/10 min, from 1.5 g/10 min to 2.0 g/10 min, from 2.0 g/10 min to 2.5 g/10 min, from 2.5 g/10 min to 3.0 g/10 min, from 3.0 g/10 min to 3.5 g/10 min, from 3.5 g/10 min to 4.0 g/10 min, from 4.0 g/10 min to 4.5 g/10 min, from 4.5 g/10 min to 5.0 g/10 min, from 5.0 g/10 min to 5.5 g/10 min, from 5.5 g/10 min to 6.0 g/10 min, from 6.0 g/10 min to 6.5 g/10 min, from 6.5 g/10 min to 7.0 g/10 min, or from any combination of one or more of these ranges.

Commercially available examples of polyethylene-based polymers that may be used as the first or third polyethylene-based polymers include those commercially available from Dow, Inc. under the name ELITE^{™} including, for example, ELITE^{™} 5960G1 and those commercially available from the ExxonMobil Chemical Company including, for example, EXXONMOBIL^{™} High Density Polyethylene HTA 108.

### TEST METHODS

### Density

Density was measured in accordance with ASTM D792, and expressed in grams/cm³ (g/cm³ or g/cc).

### Melt Index (I₂)

Melt index (I₂) was measured in accordance with ASTM D-1238 at 190°C at 2.16 kg. The values for melt indices are reported in g/10 min, which corresponds to grams eluted per 10 minutes.

### Tensile Strength

Tensile strength was measured in accordance with ASTM D-882, and expressed in megapascals (MPa).

### Tensile Modulus of Elasticity

Tensile modulus of elasticity was measured in accordance with ASTM D-882, and expressed in megapascals (MPa)

### Elmendorf Tear Resistance

Elmendorf tear resistance was measured in accordance with ASTM D-1922, and expressed in newton (N).

### Puncture Resistance

Puncture resistance was measured on a ZWICK model Z010 with TestXpertII software. The specimen size is 6" × 6" and at least 5 measurements are made to determine an average puncture value. A 1000 Newton load cell is used with a round specimen holder. The specimen is a 4 inch diameter circular specimen. The Puncture resistance procedures follow ASTM D5748-95 standard, with modification to the probe described here. The puncture probe is a ½ inch diameter ball shaped polished stainless steel probe. There is no gauge length; the probe is as close as possible to, but not touching, the specimen. The probe is set by raising the probe until it touched the specimen. Then the probe is gradually lowered, until it is not touching the specimen. Then the crosshead is set at zero. Considering the maximum travel distance, the distance would be approximately 0.10 inch. The crosshead speed used is 250 mm/minute. The thickness is measured in the middle of the specimen. The thickness of the film, the distance the crosshead traveled, and the peak load are used to determine the puncture by the software. The puncture probe is cleaned after each specimen. The puncture energy is the area under the curve of the load/elongation curve (in Joules).

### Haze

Haze was measured in accordance with ASTM D1003, and expressed in a percent

### Clarity

Clarity was measured in accordance with ASTM D1003, and expressed in a percent

### EXAMPLES

The following examples illustrate features of the present disclosure but are not intended to limit the scope of the disclosure.

The raw materials shown in Table 1 were used to prepare the Inventive Films and Comparative Films discussed below. Each of the resins are commercially available from Dow, Inc. unless noted otherwise.

**Table 1**

| **Commercial Name** | **Type** | **I₂ (g/10 min)** | **Density (g/cc)** |
|---|---|---|---|
| ELITE^{™} 5960G1 | Ethylene-based polymer | 0.85 | 0.962 |
| ELITE^{™} 5538G | Ethylene-based polymer | 1.3 | 0.941 |
| ELITE^{™} 5400G | Ethylene-based polymer | 1.0 | 0.916 |
| INNATE^{™} TH60 | Ethylene-based polymer | 0.85 | 0.912 |
| INNATE^{™} ST70 | Ethylene-based polymer | 0.85 | 0.926 |
| VERSIFY^{™} 2300 | Propylene-Ethylene copolymer | 2.0 | 0.867 |

Multilayer films were formed using the materials listed in the above table. The Multilayer films were produced using a Dr. Collin 5-layer co-extrusion blown film line. The Extruder size was 25 mm for extruders A, B, and D and was 30 mm for extruder C. The order of the extruders was A:B:C:B:D. The die gap was 1.8 mm. The maximum line speed was 30 meters/minute. Gravimetric Feeders were used. The maximum output was 25 kg/hr for LLDPE. 5-layer coextruded films were casted at a thickness of 120 microns, 100 microns and 20 microns. Table 2 shows the composition of the comparative film, while Tables 3, 4, and 5 shows the compositions of Inventive films 1, 2 and 3 respectively.

The 120 micron and the 100 micron thick films subsequently underwent a machine direction orienting process to reach a thickness of 20 microns. Tables 6 and 7 show the temperature profile of the extruders and the specifics of the machine direction orienting process for the comparative film of Table 2, respectively. For the comparative film, the 120 micron thick film had a take off speed of 3.0 m/min, the 100 micron thick film had a take off speed of 3.4 m/min, and the 20 micron thick film had a take off speed of 15.3 m/min. Tables 8 and 9 show the temperature profile of the extruders and the specifics of the machine direction orienting process for Inventive film 1, respectively. For Inventive film 1, the 120 micron thick film had a take off speed of 2.8 m/min, the 100 micron thick film had a take off speed of 3.5 m/min, and the 20 micron thick film had a take off speed of 17.4 m/min. Tables 10 and 11 show the temperature profile of the extruders and the specifics of the machine direction orienting process for Inventive film 2, respectively. For Inventive film 2, the 120 micron thick film had a take off speed of 3.1 m/min, the 100 micron thick film had a take off speed of 3.8 m/min, and the 20 micron thick film had a take off speed of 19 m/min. Tables 12 and 93 show the temperature profile of the extruders and the specifics of the machine direction orienting process for Inventive film 3, respectively. For Inventive film 3, the 120 micron thick film had a take off speed of 3.1 m/min, the 100 micron thick film had a take off speed of 3.8 m/min, and the 20 micron thick film had a take off speed of 19 m/min.

**Table 2**

| **Comparative Film** | | | | |
|---|---|---|---|---|
| **Layer** | **Material** | **Thickness (µm)** | **Density (g/cm³)** | **Melt Index (I₂)** |
| A | ELITE^{™} | 15 | 0.962 | 0.85 |
| | 5960G1 | | | |
| B | ELITE^{™} | 30 | 0.9388 | 1.21 |
| | 5538G + | | | |
| | INNATE^{™} | | | |
| | ST70 20% | | | |
| C | ELITE^{™} | 30 | 0.916 | 1 |
| | 5400G | | | |
| B | ELITE^{™} | 30 | 0.9388 | 1.21 |
| | 5538G + | | | |
| | INNATE^{™} | | | |
| | ST70 20% | | | |
| D | ELITE^{™} | 15 | 0.962 | 0.85 |
| | 5960G1 | | | |

**Table 3**

| **Inventive Film 1** | | | | |
|---|---|---|---|---|
| **Layer** | **Material** | **Thickness (µm)** | **Density (g/cm³)** | **Melt Index (I₂)** |
| A | ELITE^{™} | 15 | 0.962 | 0.85 |
| | 5960G1 | | | |
| B | ELITE^{™} | 40.5 | 0.9388 | 1.21 |
| | 5538G + | | | |
| | INNATE^{™} | | | |
| | ST70 20% | | | |
| C | VERISFY 2300 | 9 | 0.867 | 2 |
| B | ELITE^{™} | 40.5 | 0.9388 | 1.21 |
| | 5538G + | | | |
| | INNATE^{™} | | | |
| | ST70 20% | | | |
| D | ELITE^{™} | 15 | 0.962 | 0.85 |
| | 5960G1 | | | |

**Table 4**

| **Inventive Film 2** | | | | |
|---|---|---|---|---|
| **Layer** | **Material** | **Thickness (µm)** | **Density (g/cm³)** | **Melt Index (I₂)** |
| A | ELITE^{™} | 15 | 0.962 | 0.85 |
| | 5960G1 | | | |
| B | VERISFY^{™} | 9 | 0.867 | 2 |
| | 2300 | | | |
| C | ELITE^{™} | 72 | 0.9388 | 1.21 |
| | 5538G + | | | |
| | INNATE^{™} | | | |
| | ST70 20% | | | |
| B | VERISFY^{™} | 9 | 0.867 | 2 |
| | 2300 | | | |
| D | ELITE^{™} | 15 | 0.962 | 0.85 |
| | 5960G1 | | | |

**Table 5**

| **Inventive Film 3** | | | | |
|---|---|---|---|---|
| **Layer** | **Material** | **Thickness (µm)** | **Density (g/cm³)** | **Melt Index (I₂)** |
| A | ELITE^{™} | 15 | 0.962 | 0.85 |
| | 5960G1 | | | |
| B | VERISFY^{™} | 9 | 0.867 | 2 |
| | 2300 | | | |
| C | ELITE^{™} | 72 | 0.936 | 1 |
| | 5538G + | | | |
| | INNATE^{™} | | | |
| | TH60 20% | | | |
| B | VERISFY^{™} | 9 | 0.867 | 2 |
| | 2300 | | | |
| D | ELITE^{™} | 15 | 0.962 | 0.85 |
| | 5960G1 | | | |

**Table 6**

| **Comparative Film** | | | | | |
|---|---|---|---|---|---|
| Extruder | A | B | C | D | Die |
| Zone | Temperature, °C | | | | |
| 1 | 30 | 30 | 30 | 30 | 240 |
| 2 | 240 | 210 | 180 | 240 | 240 |
| 3 | 260 | 230 | 210 | 240 | 240 |
| 4 | 260 | 240 | 220 | 240 | 240 |
| 5 | 240 | 240 | 220 | 240 | 240 |
| 6 | 230 | 240 | 230 | 230 | 240 |
| 7 | 230 | 240 | 230 | 230 | 240 |
| | | | | | |
| Melt Temperature, °C | 217 | 235 | 202 | 230 | |
| Melt Pressure, Bar | 77 | 158 | 139 | 101 | |

**Table 7**

| **Comparative Film** | | | |
|---|---|---|---|
| | Temperature, °C | Speed, m/min | |
| Input | ambient | MDO 5X (100 micron film) | MDO 6X (120 micron film) |
| Group 1 | 85 | 2.29 | 2.29 |
| Group 2 | 110 | 2.29 | 2.29 |
| Group 3 | 120 | 2.29 | 2.29 |
| Group 4 | 75 | 11.9 | 14.2 |
| Group 5 | 65 | 11.9 | 14.2 |
| Group 6 | 45 | 11.9 | 14.2 |
| Group 7 | 20 | 11.9 | 14.2 |

**Table 8**

| **Inventive Film 1** | | | | | |
|---|---|---|---|---|---|
| Extruder | A | B | C | D | Die |
| Zone | Temperature, °C | | | | |
| 1 | 30 | 30 | 30 | 30 | 240 |
| 2 | 240 | 210 | 180 | 240 | 240 |
| 3 | 260 | 230 | 200 | 240 | 240 |
| 4 | 260 | 240 | 210 | 240 | 240 |
| 5 | 240 | 240 | 210 | 240 | 240 |
| 6 | 230 | 240 | 230 | 230 | 240 |
| 7 | 230 | 240 | 230 | 230 | 240 |
| | | | | | |
| Melt Temperature, °C | 215 | 236 | 191 | 229 | |
| Melt Pressure, Bar | 71 | 183 | 191 | 105 | |

**Table 9**

| **Inventive Film 2** | | | |
|---|---|---|---|
| | Temperature, °C | Speed, m/min | |
| Input | ambient | MDO 5X (100 micron film) | MDO 6X (120 micron film) |
| Group 1 | 85 | 2.29 | 2.29 |
| Group 2 | 110 | 2.29 | 2.29 |
| Group 3 | 120 | 2.29 | 2.29 |
| Group 4 | 75 | 11.9 | 14.42 |
| Group 5 | 65 | 11.9 | 14.42 |
| Group 6 | 45 | 11.9 | 14.42 |
| Group 7 | 20 | 11.9 | 14.42 |

**Table 10**

| **Inventive Film 2** | | | | | |
|---|---|---|---|---|---|
| Extruder | A | B | C | D | Die |
| Zone | Temperature, °C | | | | |
| 1 | 30 | 30 | 30 | 30 | 240 |
| 2 | 240 | 180 | 210 | 230 | 240 |
| 3 | 260 | 210 | 230 | 240 | 240 |
| 4 | 260 | 220 | 240 | 240 | 240 |
| 5 | 250 | 230 | 240 | 240 | 240 |
| 6 | 230 | 230 | 240 | 230 | 240 |
| 7 | 230 | 230 | 240 | 230 | 240 |
| | | | | | |
| Melt Temperature, °C | 226 | 226 | 224 | 229 | |
| Melt Pressure, Bar | 84 | 101 | 161 | 105 | |

**Table 11**

| **Inventive Film 2** | | | |
|---|---|---|---|
| | Temperature, °C | Speed, m/min | |
| Input | ambient | MDO 5X (100 micron film) | MDO 6X (120 micron film) |
| Group 1 | 85 | 2.29 | 2.29 |
| Group 2 | 110 | 2.29 | 2.29 |
| Group 3 | 120 | 2.29 | 2.29 |
| Group 4 | 75 | 11.9 | 14.42 |
| Group 5 | 65 | 11.9 | 14.42 |
| Group 6 | 45 | 11.9 | 14.42 |
| Group 7 | 20 | 11.9 | 14.42 |

**Table 12**

| **Inventive Film 3** | | | | | |
|---|---|---|---|---|---|
| Extruder | A | B | C | D | Die |
| Zone | Temperature, °C | | | | |
| 1 | 30 | 30 | 30 | 30 | 240 |
| 2 | 240 | 180 | 210 | 230 | 240 |
| 3 | 260 | 210 | 230 | 240 | 240 |
| 4 | 260 | 220 | 230 | 240 | 240 |
| 5 | 250 | 230 | 230 | 240 | 240 |
| 6 | 230 | 230 | 240 | 230 | 240 |
| 7 | 230 | 230 | 240 | 230 | 240 |
| | | | | | |
| Melt Temperature, °C | 227 | 224 | 214 | 229 | |
| Melt Pressure, Bar | 83 | 94 | 150 | 104 | |

Now referring to Tables 13, 14, and 15, various physical properties of the blown film (20 micron), the 5X orientation film (100 micron), and the 6X orientation film (120 micron) were tested and recorded in Tables 13, 14, and 15 respectively.

**Table 13**

| 20 micron Film | Comparative Film | Inventive Film 1 | Inventive Film 2 | Inventive film 3 |
|---|---|---|---|---|
| Tensile Strength Machine Direction (MD), MPa | 45.4 | 47.9 | 43.4 | 50.7 |
| Tensile Strength Cross Direction (TD), MPa | 34.2 | 40.7 | 42 | 34.8 |
| 2% Secant Modulus (MD), MPa | 466.3 | 461.6 | 437.4 | 433.6 |
| 2% Secant Modulus (TD), MPa | 453.9 | 509.3 | 510.3 | 469.6 |
| Puncture Energy, J | 0.96 | 1.172 | 1.015 | 1.27 |
| Puncture Force, N | 24.34 | 24.003 | 23.447 | 25.039 |
| Elmendorf Tear (MD), N | 0.42 | 0.41 | 0.49 | 0.8 |
| Elmendorf Tear (TD), N | 4.27 | 3.77 | 3.78 | 4.31 |

**Table 14**

| 100 micron Film (5X) | Comparative Film | Inventive Film 1 | Inventive Film 2 | Inventive film 3 |
|---|---|---|---|---|
| Tensile Strength Machine Direction (MD), MPa | 141.5 | 165.7 | 140.1 | 148.1 |
| Tensile Strength Cross Direction (TD), MPa | 27.7 | 28.6 | 30.252 | 24.871 |
| 2% Secant Modulus (MD), MPa | 1261.4 | 1305 | 1188.3 | 1196.2 |
| 2% Secant Modulus (TD), MPa | 1052.1 | 1074.7 | 997.8 | 891.7 |
| Puncture Energy, J | 0.112 | 0.173 | 0.359 | 0.756 |
| Puncture Force, N | 14.168 | 16.293 | 0.756 | 42.673 |
| Elmendorf Tear (MD), N | 0.37 | 0.22 | 0.21 | 0.15 |
| Elmendorf Tear (TD), N | 1.94 | 3.99 | 2.81 | 3.18 |

**Table 15**

| 120 micron Film (6X) | Comparative Film | Inventive Film 1 | Inventive Film 2 | Inventive film 3 |
|---|---|---|---|---|
| Tensile Strength Machine Direction (MD), MPa | 190 | 212.5 | 191.5 | 194.3 |
| Tensile Strength Cross Direction (TD), MPa | 28.6 | 30.2 | 29.3 | 21 |
| 2% Secant Modulus (MD), MPa | 1474.1 | 1578.5 | 1500.2 | 1429.7 |
| 2% Secant Modulus (TD), MPa | 1110 | 1160.6 | 1082.5 | 978.3 |
| Puncture Energy, J | 0.102 | 0.382 | 0.269 | 0.568 |
| Puncture Force, N | 11.202 | 26.689 | 27.1 | 37.005 |
| Elmendorf Tear (MD), N | 0.25 | 0.68 | 0.35 | 0.21 |
| Elmendorf Tear (TD), N | 1.37 | 2.26 | 1.98 | 2.18 |

As shown in Tables 13, 14, and 15, increasing orientation of both the comparative film and the inventive films had expected impacts on the tensile strength in both directions and on the 2% secant modulus in both directions. It was expected that increasing orientation would increase the stiffness of the film and thus increase the 2% secant modulus. It was also expected that increasing the molecular alignment of the films through orientation would increase tensile strength in the MD and decrease tensile strength in the TD.

It was expected that with increasing orientation, there would be an increase in the stiffness of the film being oriented, which would result in the increase in the force required to puncture a film. At the same time, with the increase in stiffness, the corresponding puncture energy would be reduced (with increasing orientation) due to the reduction in the film ability to stretch further when a force is applied. This phenomenon can be clearly observed in the comparative film, which experienced an increase in the puncture force to penetrate the film, and at the same time, a reduction in puncture energy. However, when a thin functional core or cores are introduced into the co-extruded film as in Inventive films 1, 2 and 3 a more significant increase puncture force with increasing orientation of the film was observed when compared to the control film. Further, Inventive film 1 showed an increase in puncture energy when further oriented from 5X to 6X. Inventive films 2 and 3 did not show an increase in puncture energy with further orientation, but did have significantly higher puncture energies when compared to the similarly oriented Comparative film.

Further, Tables 13, 14, and 15 show that the presence of a thin functional layer or layers led to a significant improvement in Elmendorf tear resistance in both the MD and TD directions of Inventive films 1, 2, and 3 when compared the comparative film at 6X orientation. It was expected that the MD tear resistance would be significantly decreased with increasing orientation, as can be observed in the comparative film. However, the results of the Inventive films indicate that the presence of a thin functional layer or layers may improve the Elmendorf tear resistance of an oriented film.

Now referring to Table 16, the haze and clarity of the films were tested and the results were recorded in Table 16 below.

**Table 16**

| | 20 micron film | | 100 micron film (5X) | | 120 micron film (6X) | |
|---|---|---|---|---|---|---|
| | Haze | Clarity | Haze | Clarity | Haze | Clarity |
| Comparative Film | 18.08 | 95.06 | 11.12 | 95.9 | 8.50 | 96.8 |
| Inventive Film 1 | 18.16 | 95.10 | 12.30 | 94.8 | 9.53 | 96.76 |
| Inventive Film 2 | 19.18 | 94.8 | 13.44 | 91.28 | 9.7 | 95.88 |
| Inventive Film 3 | 17.74 | 94.22 | 11.92 | 93.3 | 9.34 | 95.96 |

As shown in Table 16, with increasing orientation the inventive films had similar haze and clarity when compared to the comparative film. This indicates that the presence of a thin functional layer or layers does not negatively impact the optical characteristics of the film.

According to a first aspect of the present disclosure, a multilayer film may comprise a first layer that may comprise a first polyethylene-based polymer. The multilayer film may also comprise a core that may comprise a first core layer that may comprise a first polyolefin. A thickness of the first core layer may be less than 10% of the total thickness of the multilayer film. The first polyolefin may comprise from 4 wt.% to 12 wt.% of ethylene based on the total weight of the first polyolefin and from 75 wt.% to 96 wt.% of propylene based on the total weight of the first polyolefin. The multilayer film may also comprise a second layer that may comprise a second polyethylene-based polymer. The core may be positioned between the first layer and the second layer. The first polyethylene-based polymer and the second polyethylene-based polymer may have the same composition or different compositions. The multilayer film may be machine direction oriented with a draw ratio of at least 4:1.

A second aspect of the present disclosure may include the first aspect where the first polyolefin comprises from 80 wt.% to 100 wt.% of the first core layer based on the total weight of the first core layer.

A third aspect of the present disclosure may include any previous aspect or combination of aspects, where the first polyolefin comprises from 8 wt.% to 12 wt.% of ethylene based on the total weight of the first polyolefin and from 75 wt.% to 85 wt.% of propylene based on the total weight of the first polyolefin.

A fourth aspect of the present disclosure may include any previous aspect or combination of aspects, where the draw ratio is at least 5:1.

A fifth aspect of the present disclosure may include any previous aspect or combination of aspects, where the multilayer film has from 3 layers to 11 layers in total.

A sixth aspect of the present disclosure may include any previous aspect or combination of aspects, where the core further comprises a second core layer comprising a third polyethylene-based polymer and a third core layer comprising a fourth polyethylene-based polymer, where the first core layer is positioned between the second core layer and the third core layer.

A seventh aspect of the present disclosure may include the sixth aspect, where the third polyethylene-based polymer and the fourth polyethylene-based polymer each have a density of less than or equal to 0.952 g/cm³ and a melt index (I₂) of less than or equal to 7.5 g/10 min.

An eighth aspect of the present disclosure may include any of the first through fourth aspects, where the core layer further comprises a second core layer comprising a fifth polyethylene-based polymer and a third core layer comprising the first polyolefin, where the second core layer is positioned between the first core layer and the third core layer.

A ninth aspect of the present disclosure may include the eighth aspect, where the fifth polyethylene-based polymer has a density of less than or equal to 0.952 g/cm³ and a melt index (I₂) of less than or equal to 7.5 g/10 min.

A tenth aspect of the present disclosure may include the seventh or eighth aspects, where the sum of the thickness of the first core layer and the thickness of the third core layer is less than 20 % of the total thickness of the multilayer film.

An eleventh aspect of the present disclosure may include any previous aspect or combination of aspects, where the first polyethylene-based polymer and the second polyethylene-based polymer each have a density of from 0.925 g/cm³ to 0.970 g/cm³ and a melt index (I₂) of from 0.3 g/10 min to 7.0 g/10 min.

A twelfth aspect of the present disclosure may include any previous aspect or combination of aspects, where the multilayer film comprises greater than or equal to 85 wt.% of polyethylene-based polymers, based on the total weight of the multilayer film.

A thirteenth aspect of the present disclosure may include any previous aspect or combination of aspects, where the first polyolefin has a density from 0.850 g/cm³ to 0.885 g/cm³ and a melt flow rate (I₂) of from 1.5 g/10 min to 25 g/10 min.

A fourteenth aspect of the present disclosure may include any previous aspect or combination of aspects, where the multilayer film has a machine direction tear resistance of greater than or equal to 0.5 newton.

A fifteenth aspect of the present disclosure may include any previous aspect or combination of aspects, where the multilayer film has puncture force of greater than or equal to 25 newton.

It will be apparent to those skilled in the art that various modifications and variations can be made to the presently disclosed technology without departing from the spirit and scope of the technology. Since modifications combinations, sub-combinations and variations of the disclosed embodiments incorporating the spirit and substance of the presently disclosed technology may occur to persons skilled in the art, the technology should be construed to include everything within the scope of the appended claims and their equivalents. Additionally, although some aspects of the present disclosure may be identified herein as preferred or particularly advantageous, it is contemplated that the present disclosure is not limited to these aspects.

It is noted that the various details described in this disclosure should not be taken to imply that these details relate to elements that are essential components of the various embodiments described in this disclosure, even in cases where a particular element is illustrated in each of the drawings that accompany the present description. Unless specifically identified as such, no feature disclosed and described herein should be construed as "essential". Contemplated embodiments of the present technology include those that include some or all of the features of the appended claims.

For the purposes of describing and defining the present disclosure it is noted that the term "about" are utilized in this disclosure to represent the inherent degree of uncertainty that may be attributed to any quantitative comparison, value, measurement, or other representation. The term "about" are also utilized in this disclosure to represent the degree by which a quantitative representation may vary from a stated reference without resulting in a change in the basic function of the subject matter at issue.

It is noted that one or more of the following claims and the detailed description utilize the terms "where" or "wherein" as a transitional phrase. For the purposes of defining the present technology, it is noted that this term is introduced in the claims as an open-ended transitional phrase that is used to introduce a recitation of a series of characteristics of the structure and should be interpreted in like manner as the more commonly used open-ended preamble term "comprising."

It should be understood that any two quantitative values assigned to a property may constitute a range of that property, and all combinations of ranges formed from all stated quantitative values of a given property are contemplated in this disclosure. Where multiple ranges for a quantitative value are provided, these ranges may be combined to form a broader range, which is contemplated in the embodiments described herein.

## Claims

1. A multilayer film comprising:
a first layer comprising a first polyethylene-based polymer;
a core comprising a first core layer comprising a first polyolefin, wherein a thickness of the first core layer is less than 10% of the total thickness of the multilayer film, and wherein the first polyolefin comprises:
from 4 wt.% to 12 wt.% of ethylene based on the total weight of the first polyolefin; and
from 75 wt.% to 96 wt.% of propylene based on the total weight of the first polyolefin; and
a second layer comprising a second polyethylene-based polymer, wherein the core is positioned between the first layer and the second layer, and wherein the first polyethylene-based polymer and the second polyethylene-based polymer have the same composition or different compositions; and
wherein the multilayer film is machine direction oriented with a draw ratio of at least 4:1.

2. The multilayer film of claim 1, wherein the first polyolefin comprises from 80 wt.% to 100 wt.% of the first core layer based on the total weight of the first core layer.

3. The multilayer film of any preceding claim, wherein the first polyolefin comprises:
from 8 wt.% to 12 wt.% of ethylene based on the total weight of the first polyolefin; and
from 75 wt.% to 85 wt.% of propylene based on the total weight of the first polyolefin.

4. The multilayer film of any preceding claim, wherein the draw ratio is at least 5:1.

5. The multilayer film of any preceding claim, wherein the multilayer film has from 3 layers to 11 layers in total.

6. The multilayer film of any preceding claim, wherein the core further comprises:
a second core layer comprising a third polyethylene-based polymer; and
a third core layer comprising a fourth polyethylene-based polymer, wherein the first core layer is positioned between the second core layer and the third core layer.

7. The multilayer film of claim 6, wherein the third polyethylene-based polymer and the fourth polyethylene-based polymer each have a density of less than or equal to 0.952 g/cm³ and a melt index (I₂) of less than or equal to 7.5 g/10 min.

8. The multilayer film of any of claims 1-4, wherein the core layer further comprises:
a second core layer comprising a fifth polyethylene-based polymer; and
a third core layer comprising the first polyolefin, wherein the second core layer is positioned between the first core layer and the third core layer.

9. The multilayer film of claim 8, wherein the fifth polyethylene-based polymer has a density of less than or equal to 0.952 g/cm³ and a melt index (I₂) of less than or equal to 7.5 g/10 min.

10. The multilayer film of any of claims 7 or 8, wherein the sum of the thickness of the first core layer and the thickness of the third core layer is less than 20 % of the total thickness of the multilayer film.

11. The multilayer film of any preceding claim, wherein the first polyethylene-based polymer and the second polyethylene-based polymer each have a density of from 0.925 g/cm³ to 0.970 g/cm³ and a melt index (I₂) of from 0.3 g/10 min to 7.0 g/10 min.

12. The multilayer film of any preceding claim, wherein the multilayer film comprises greater than or equal to 85 wt.% of polyethylene-based polymers, based on the total weight of the multilayer film.

13. The multilayer film of any preceding claim, wherein the first polyolefin has a density from 0.850 g/cm³ to 0.885 g/cm³ and a melt flow rate (I₂) of from 1.5 g/10 min to 25 g/10 min.

14. The multilayer film of any preceding claim, wherein the multilayer film has a machine direction tear resistance of greater than or equal to 0.5 newton.

15. The multilayer film of any preceding claim, wherein the multilayer film has puncture force of greater than or equal to 25 newton.
